Europäisches Patentamt

European Patent Office

Office européen des brevets

(19)

(11) Veröffentlichungsnummer: **0 121 065**
**B1**

# (12) EUROPÄISCHE PATENTSCHRIFT

(45) Veröffentlichungstag der Patentschrift:
29.04.87

(51) Int. Cl.⁴: **F 16 C 29/06,** F 16 C 29/00

(21) Anmeldenummer: 84101590.2

(22) Anmeldetag: 16.02.84

(54) Führungslager für einen Linearkörper.

(30) Priorität: 07.03.83 DE 3307993

(43) Veröffentlichungstag der Anmeldung:
10.10.84 Patentblatt 84/41

(45) Bekanntmachung des Hinweises auf die Patenterteilung:
29.04.87 Patentblatt 87/18

(84) Benannte Vertragsstaaten:
AT BE CH DE FR GB IT LI LU NL SE

(56) Entgegenhaltungen:
EP-A-0 060 515
DE-B-1 167 603
DE-C-488 310
DE-C-866 278
US-A-3 353 875

(73) Patentinhaber: Isert, Hugo, Bahnhofstrasse 33,
D-6419 Eiterfeld 1 (DE)

(72) Erfinder: Isert, Hugo, Bahnhofstrasse 33, D-6419
Eiterfeld 1 (DE)

(74) Vertreter: Olbricht, Karl Heinrich, Dipl.- Phys., Am
Weinberg 15, D-3556 Niederweimar (DE)

## Beschreibung

Die Erfindung bezieht sich auf ein Führungslager nach dem Oberbegriff von Anspruch 1. Es dient zur zweispurigen Führung eines Werkzeuges oder sonstigen Gegenstandes an oder auf einem Linearkörper, z.B. einer Laufschiene mit im Querschnitt konvex gekrümmter Lauffläche.

In der nicht voröffentlichten EP-A-0 080 515 ist ein Linear-Kugellager beschrieben, und zwar als ein in das dort offenbarte Führungssystem vollständig integrierter Teil. Es besteht aus einem quaderförmigen, zu dem Linearkörper bzw. der Laufschiene hin offenen Gehäuse und einem darin zentral angeordneten, an seinen Enden halbkugeligen zylindrischen Laufkörper, den auf der offenen Gehäuseseite zwei sich an der Laufschiene abstützende Kugelfolgen in parallelen Ebenen endlos umlaufen. Die Stirnwände des Gehäuses sind innenseitig konkav gekrümmt.

Ein wichtiges Ziel der Erfindung liegt darin, dieses ältere Führungslager (Linear-Kugellager) so zu verändern, daß es allgemein für Linearführungen verwendbar ist und serienmäßig hergestellt werden kann.

Der Grundgedanke der Erfindung ist im kennzeichnenden Teil von Anspruch 1 angegeben. Ausgestaltungen sind Gegenstand der Ansprüche 2 bis 8.

Ein wichtiges Merkmal der Erfindung besteht darin, daß die auf dem Laufkörper in parallelen Ebenen endlos umlaufend gehaltenen beiden Kugelfolgen je einen Längsschlitz in einer konkaven Gehäuse-Längswand teildurchsetzen. Die Breite der Schlitze ist kleiner als der Durchmesser der Kugeln, so daß diese gegen Herausfallen gesichert sind. Ferner trennt eine Gehäuse-Zwischenwand, die eine mit ihrem Rand den zylindrischen Laufkörper in dessen Längsebene umschließende Öffnung aufweist, den inneren Raum in zwei Kammern, in denen je eine Kugelfolge umläuft und die von je einer Deckplatte begrenzt sind, die als zur Zwischenwand paralleler, abnehmbarer Kammerdeckel ausgebildet ist. Der Gehäuse-Grundkörper besteht zweckmäßig aus einem Stück, beispielsweise aus einem maßhaltigen Kunststoff. Der zylindrische Laufkörper und die beiden Deckplatten sind insbesondere aus Stahl mit gehärteten und geschliffenen Laufflächen.

Bei einer bevorzugten Ausführungsform der Erfindung ist der allgemein bolzenförmige zylindrische Laufkörper parallel zu den Deckplatten auf beiden Seiten abgeflacht. Das ergibt eine flachere Form des Gehäuses und eine großflächige Unterlage für die Deckplatten, die z.B. durch eine sie verbindende Schraube mit Mutter gehalten sind. Exzenterschrauben, wie sie schon für das ältere Führungslager zur Befestigung und Einstellung verwendet wurden, pressen die Deckplatten nach dem Einsetzen der beiden Kugelfolgen fest an den zylindrischen Laufkörper. Nach erfolgter Ein- bzw.

Nachstellung sind die jeweils belasteten Kugeln beider Folgen in drei Punkten abgestützt, und zwar ausschließlich an dem Linearkörper bzw. der Laufschiene, an dem zylindrischen Laufkörper und an den Kammerdeckeln bzw. Deckplatten.

Weitere Merkmale, Einzelheiten und Vorteile der Erfindung ergeben sich aus der folgenden Beschreibung eines Ausführungsbeispiels anhand der Zeichnung. Darin zeigen:

Fig. 1 eine auseinandergezogene Schrägansicht eines Führungslagers nach der Erfindung,

Fig. 2 eine Schrägansicht des aus den Teilen gemäß Fig. 1 zusammengesetzten Führungslagers und

Fig. 3 eine Seitenansicht des Führungslagers von Fig. 2 in Anlage an einem zylindrischen Linearkörper.

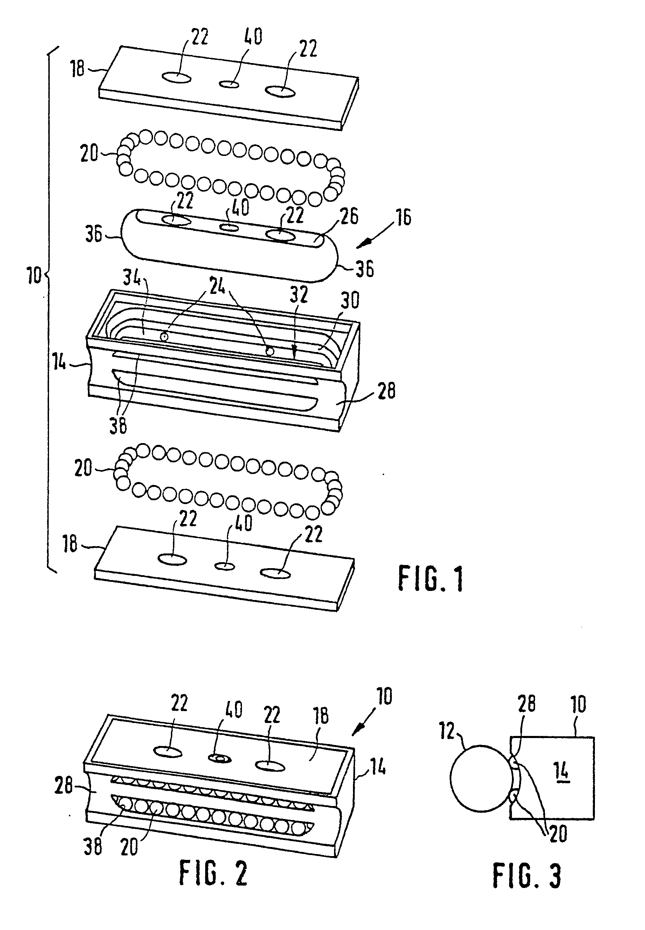

Man erkennt aus Fig. 1, daß das allgemein mit 10 bezeichnete Führungslager ein Gehäuse 14 aufweist, einen zylindrischen Laufkörper 16, zwei gleiche Kugelfolgen 20 sowie zwei gleiche Deckplatten 18. Stirnseitig ist das Gehäuse 14 innen konkav gekrümmt. Die Krümmung ist halbkugelig geformten Enden 36 des zylindrischen Laufkörpers 16 angepaßt. Dieser ist beidseitig (oben und unten) mit Abflachungen 26 versehen. An letzteren liegen im montierten Zustand die Deckplatten 18 an. Eine Zwischenwand 30, vorzugsweise in der Mitte des Gehäuses 14, trennt es in zwei Kammern.

Die Zwischenwand 30 weist eine große Öffnung 32 auf, die mit ihrem Rand 34 den in sie eingesetzten zylindrischen Laufkörper 16 umschließt. Von außen ist die Zwischenwand 30 deutlich als Wandstreifen zu erkennen, der sich zwischen zwei parallelen Schlitzen 36 in der (vorderen) Gehäusewand 28 befindet. Diese ist eine Konkavfläche, welche der Laufflächenkrümmung des zugehörigen Linearkörpers 12 (Fig. 3) angepaßt ist. Die Breite b der Schlitze 38 ist, wie Fig. 2 erkennen läßt, ein wenig kleiner als der Durchmesser d der Kugeln jeder Folge 20. Die mittige Bohrung 42 in beiden Deckeln 18 und in dem bolzenförmigen Laufkörper 16 ermöglicht ein Verbinden der beiden Deckplatten 18 mittels einer Schraube o.dgl. In die beiden größeren Öffnungen 22 der genannten drei Teile werden die oben erwähnten Exzenterschrauben eingesetzt. Zwei kleine Bohrungen 24 im Rand 34 der Öffnung 32 in der Zwischenwand 30 haben nur fertigungstechnische Bedeutung, z.B. als Halterungs-Aufnahmen.

Das fertige, aus den Teilen nach Fig. 1 zusammengesetzte Führungslager 10 ist in Fig. 2 dargestellt. Fig. 5 zeigt ein solches Führungslager an einer zugehörigen Laufschiene 12 in Form eines Rundstabes. Der Lineakörper 12 kann auch aus mehreren solchen Stäben zusammengesetzt sein.

**Patentansprüche**

1. Führungslager (10) für einen Linearkörper (12), z.B. eine Welle, einen Stab o.dgl., der sich an zwei parallel zueinander endlos umlaufenden Kugelfolgen (20) abstützt, die in einem Gehäuse (14) zwischen einem Halbkugel-Enden (36) aufweisenden zylindrischen Laukörper (16) und je einer Deckplatte (18) gefesselt sind, dadurch gekennzeichnet, daß an wenigstens einer Seite des Gehäuses (14) eine nach außen konkav gekrümmte Fläche (28) mit Längsschlitzen (38) vorhanden ist, deren Breite (b) kleiner als der Durchmesser (d) der Kugeln ist und die von den Kugelfolgen (20) teildurchsetzt sind.

2. Führungslager nach Anspruch 1, dadurch gekennzeichnet, daß der zylindrische Laufkörper (16) und die Deckplatten (18) aus Stahl bestehen, insbesondere mit gehärteten Laufflächen.

3. Führungslager nach Anspruch 1 oder 2, dadurch gekennzeichnet, daß der zylindrische Laufkörper (16) parallel zu den Deckplatten (18) beidseitig Abflachungen (26) hat.

4. Führungslager nach einem der Ansprüch, 1 bie 3, dadurch gekennzeichnet, deß das Gehäuse (14) durch eine Zwischenwand (30) in zwei Kammern unterteilt ist.

5. Führungslager nach Anspruch 4, dadurch gekennzeichnet, daß die Zwischenwand (30) eine zentrale Öffnung (32) aufweist, die den zylindrischen Laufkörper (16) in seiner Längsmittelebene umschließt.

6. Führungslager nach wenigstens einem der Ansprüche 1 bis 5, dadurch gekennzeichnet, daß das Gehäuse (14) ein einstückiges Kunststoffteil und, nach Einbringung des zylindrischen Laufkörpers (16) sowie der beiden Kugelfolgen (20),mit den beiden Deckplatten (18) fest verbunden ist.

7. Führungslager nach wenigstens einem der Ansprüche 1 bis 5, dadurch gekennzeichnet, daß das Gehäuse (14) aus zwei Schalen besteht, die jeweils mit einer Deckplatte (18) einstückig und, nach Einbringung des zylindrischen Laufkörpers (16) sowie der beiden Kugelfolgen (20), fest miteinander verbunden sind.

8. Führungslager nach wenigstens einem der Ansprüche 1 bis 7, dadurch gekennzeichnet, daß das Gehäuse (14) samt Deckplatten (18) und zylindrischem Laufkörpar (16) von wenigstens zwei Querbohrungen (22) durchsetzt ist.

**Claims**

1. Guide bearing (10) for a linear body (12) such as a shaft, a rod or the like which is supported by two ball series (20) circulating in parallel closed loops and being retained in a housing (14) between a cylindrical bearing body (16) that has semispherical ends (36) and one cover plate (18) each, characterized in that on at least one side of the housing (14), there is an outwardly curved face (28) comprising longitudinal slots (38) whose width (b) is smaller than the diameter (d) of the balls, said ball series (20) axtending partly through the slots.

2. Guide bearing according to claim 1, characterized in that the cylindrical bearing body (16) and the cover plates (18) consist of steel, in particular with hardened running surfaces.

3. Guide bearing according to claim 1 or claim 2, characterized in that the cylindrical bearing body (16) comprises on either side flats (26) that are parallel to the cover plates (18).

4. Guide bearing according to any one of claims 1 to 5, characterized in that the housing (14) is divided by a partition (30) to form two chambers.

5. Guide bearing according to claim 4, charactarized in that the partition (30) comprises a central aperture (32) enclosing the cylindrical bearing body (16) in its longitudinal central plane.

6. Guide bearing according to at least one of claims 1 to 5, characterized in that the housing (14) is an integral plastic piece and is firmly connected to either cover plate (18) after mounting of the cylindrical bearing body (16) and of the two ball series (20).

7. Guide bearing according to at least one of claims 1 to 5, characterized in that the housing (14) is of the clamshell type, each shell being integral with a cover plate (18) and the two shells being firmly connected to each other after mounting of the cylindrical bearing body (16) and of the two ball series (20).

8. Guide bearing according to at least one of claims 1 to 7, characterized in that at least two transversal bores (22) extend through the housing (14) inclusive of cover plates (18) and cylindrical bearing body (16).

**Revendications**

1. Palier de guidage (10) pour une pièce linéaire (12), par exemple un arbre, une barre etc., qui s'appuie à deux rangées de billes (20) circulant sans fin et parallèlement l'une à l'autre, lesquelles sont disposées dans un boîtier (14) entre une pièce de roulement cylindrique (16), présentant des extrémités hémisphériques (36), et une plaque de couverture (18) pour chacune, caractérisé en ce que, au moins d'un côté du boîtier (14), se trouve une surface à courbure concave vers l'extérieur (28) avec des fentes oblongues (38), dont la largeur (b) est inférieure au diamètre (d) des billes et qui sont partiellement traversées par les rangées de billes (20).

2-. Palier de guidage suivant la revendication 1, caractérisé en ce que la pièce de roulement cylindrique (16) et les plaques de couverture (18) sont fabriquées en acier, en particulier avec des surfaces de roulement trempées.

3. Palier de guidage suivant la revendication 1 ou 2, caractérisé en ce que la pièce de roulement cylindrique (16) est pourvue, des deux côtés, d'aplattissements (26) parallèles aux plaques de couverture (18).

4. Palier de guidage suivant une des revendications 1 à 3, caractérisé en ce que le boîtier (14) est divisé en deux chambres à l'aide d'une cloison (30).

5. Palier de guidage suivant la revendication 4, caractérisé en ce que le cloison (30) présente une ouverture centrale (32), qui entoure la pièce de roulement cylindrique (16) en son plan médian longitudinal.

6. Palier de guidage suivant au moins une des revendications 1 à 5, caractérisé en ce que le boîtier (14) est un élément en matière synthétique formé d'une seule pièce, étant fermement attaché aux deux plaques de couverture (18) après l'introduction de la pièce de roulement cylindrique (16) ainsi que des deux rangées de billes (20).

7. Palier de guidage suivent au moins une des revendications 1 à 5, caractérisé en ce que le boîtier (14) est composé de deux cuvettee, dont chacune est formée d'une seule pièce avec la plaque de couverture (18) et qui sont fermement attachées l'une à l'autre après l'introduction de la pièce de roulement cylindrique (16) ainsi que des deux rangées de billes (20).

8. Palier de guidage suivant au moins une des revendications 1 à 7, caractérisé en ce que le boîtier (14), y compris les plaques de couverture (18) et la pièce de roulement cylindrique (16), est traversé par au moins deux alésages transversaux (22).

FIG. 1

FIG. 2

FIG. 3